# EUROPEAN PATENT APPLICATION

(11) **EP 4 177 333 A1**
(43) Date of publication of application: **10.05.2023**
(21) Application number: 21833871.3
(22) Date of filing: 09.06.2021
(51) Int. Cl.: C12M 1/34, G01N 21/17

(54) **INFORMATION PROCESSING DEVICE, INFORMATION PROCESSING METHOD, AND PROGRAM**

(30) Priority: 02.07.2020 JP 2020115067
(71) Applicant: FUJIFILM Corporation, Tokyo 106-8620 (JP)
(72) Inventor: INOUE, Tsutomu, Ashigarakami-gun, Kanagawa 258-8577 (JP); NAGASE, Masaya, Ashigarakami-gun, Kanagawa 258-8577 (JP); WATANABE, Yuya, Ashigarakami-gun, Kanagawa 258-8577 (JP); KURODA, Kosuke, Ashigarakami-gun, Kanagawa 258-8577 (JP)
(74) Representative: Hoffmann Eitle
(86) International application number: PCT/JP2021/021998
(87) International publication number: WO 2022/004319

(57) **Abstract**

Provided is an information processing device that performs display control to display a vessel image obtained by imaging a vessel in which a cell is seeded on a display and includes at least one processor. The processor acquires two or more vessel images obtained by imaging the same vessel at different dates and times and displays the acquired two or more vessel images on the display such that different imaging dates and times are distinguishable.

## Description

### BACKGROUND OF THE INVENTION

### 1. Field of the Invention

The technique of the present disclosure relates to an information processing device, an information processing method, and a program.

### 2. Description of the Related Art

In recent years, antibody drugs have attracted attention. Unlike low-molecular drugs according to the related art, antibody drugs are composed of, for example, complex proteins. Therefore, it is difficult to artificially synthesize the antibody drugs. Therefore, the antibody drugs are produced by inserting a gene corresponding to a desired human protein into a cell, such as a Chinese hamster ovary (CHO) cell, producing a desired protein by a function of the cell, and then extracting and purifying the protein.

In addition, a single cell cloning technique is known in which cells having genes inserted thereinto are seeded and cultured one by one in each well (culture vessel) of a well plate to generate cell populations derived from single cells. According to the single cell cloning technique, the uniformity of the cell producing an antibody is improved, and the quality of antibody drugs produced by this technique is improved.

However, in a case in which cells are seeded in the well, a plurality of cells may be erroneously seeded. In this case, a cell population cultured in the well is derived from a plurality of cells, and the unity of cells (so-called monoclonality) is not obtained. In order to guarantee the monoclonality of the cell population cultured in the well, it is necessary to check that the number of cells is one immediately after the cell population is seeded in the well (for example, see JP2019-201666A).

### SUMMARY OF THE INVENTION

At present, an examiner visually observes an image (hereinafter, referred to as a vessel image) obtained by imaging a well as a culture vessel to determine the monoclonality. The examiner observes the vessel image to count the number of cells in the well. In a case in which it is checked that the number of cells in the well, in which the cell population has been formed, is one immediately after seeding, the monoclonality for the cell population is guaranteed.

The monoclonality determination needs to be performed on, for example, 3000 wells per project for producing an antibody. The visual check of all of a large number of vessel images imposes a large burden on the examiner.

Further, the well includes, for example, a culture medium, debris (for example, dead cells, cell debris, and dust), or scratches on the well in addition to true cells. Therefore, a large number of structures are included in one vessel image. For this reason, it is not easy for the examiner to perform the monoclonality determination on the basis of one vessel image, and the burden on the examiner is large.

In addition, in the related art, the monoclonality determination has been performed by visual check using a microscope. In this case, as a method for checking whether an object is a cell, it is effective to check that an object is a three-dimensional sphere by moving the focus of the microscope back and forth. However, in the culture of CHO cells, for example, the culture is performed using 20 to 30 well plates each having 96 wells. As described above, it is very difficult to check the cells one by one using a large number of well plates each having a large number of wells, and the burden on the examiner is large.

An object of the technique of the present disclosure is to provide an information processing device, an information processing method, and a program that can reduce a burden on an examiner in determination of monoclonality.

In order to achieve the above object, according to the present disclosure, there is provided an information processing device that performs display control to display a vessel image obtained by imaging a vessel in which a cell is seeded on a display. The information processing device comprises at least one processor. The processor acquires two or more vessel images obtained by imaging the same vessel at different dates and times and displays the acquired two or more vessel images on the display such that different imaging dates and times are distinguishable.

Preferably, the processor acquires, as the vessel images, two or more of a first vessel image captured before the seeding of the cell, a second vessel image captured on a day of the seeding of the cell, a third vessel image captured a day after the seeding of the cell, and a fourth vessel image captured in a culture process two or more days after the seeding of the cell.

Preferably, the processor displays each of the two or more vessel images while changing a color of a frame such that different imaging dates and times are distinguishable.

Preferably, the processor displays the number of days elapsed since the seeding of the cell in association with each of the two or more vessel images such that different imaging dates and times are distinguishable.

Preferably, the processor displays two or more vessel images at positions corresponding to the number of days elapsed since the seeding of the cell such that different imaging dates and times are distinguishable.

Preferably, the processor synchronously displays two or more vessel images.

Preferably, the processor creates a difference image from the two vessel images and displays the created difference image on the display.

Preferably, the processor creates the difference image from two images selected from a first vessel image captured before the seeding of the cell, a second vessel image captured on a day of the seeding of the cell, a third vessel image captured a day after the seeding of the cell, and a fourth vessel image captured in a culture process two or more days after the seeding of the cell.

Preferably, the processor calculates a difference between the first vessel image and the second vessel image, the third vessel image, or the fourth vessel image to create the difference image.

Preferably, the processor performs positional deviation correction on the two vessel images and creates the difference image.

Preferably, the processor performs the positional deviation correction on the basis of a shape of the vessel or a scratch on the vessel in the vessel image.

Preferably, the processor receives input information input from an input operation unit, and selects two or more vessel images to be displayed on the display on the basis of the input information.

Preferably, the processor acquires the vessel image captured at a different date and time for the same vessel as one of the vessel images being displayed on the display on the basis of the input information and displays the acquired vessel image on the display together with the vessel image being displayed on the display.

According to the present disclosure, there is provided an information processing method that performs a process of displaying a vessel image obtained by imaging a vessel in which a cell is seeded on a display. The information processing method comprises: acquiring two or more vessel images obtained by imaging the same vessel at different dates and times; and displaying the acquired two or more vessel images on the display such that different imaging dates and times are distinguishable.

According to the present disclosure, there is provided a program that causes a computer to execute a process of displaying a vessel image obtained by imaging a vessel in which a cell is seeded on a display. The program causes the computer to execute a process comprising: acquiring two or more vessel images obtained by imaging the same vessel at different dates and times; and displaying the acquired two or more vessel images on the display such that different imaging dates and times are distinguishable.

According to the technique of the present disclosure, it is possible to provide an information processing device, an information processing method, and a program that can reduce a burden on an examiner in determination of monoclonality.

### BRIEF DESCRIPTION OF THE DRAWINGS

Fig. 1 is a schematic diagram illustrating a determination support system.
Fig. 2 is a diagram illustrating a type of vessel image.
Fig. 3 is a diagram schematically illustrating an example of a first vessel image.
Fig. 4 is a diagram schematically illustrating an example of a second vessel image.
Fig. 5 is a diagram schematically illustrating an example of a third vessel image.
Fig. 6 is a diagram schematically illustrating an example of a fourth vessel image.
Fig. 7 is a diagram illustrating an example of an imaging operation by an imaging device.
Fig. 8 is a diagram illustrating an example of a hardware configuration of an information processing device.
Fig. 9 is a block diagram illustrating a functional configuration of the information processing device.
Fig. 10 is a diagram illustrating an example of a display screen.
Fig. 11 is a diagram illustrating an example of a vessel image selection operation.
Fig. 12 is a diagram illustrating an example of an input interface for inputting a determination result.
Fig. 13 is a diagram illustrating an example of the display of an aggregation result.
Fig. 14 is a flowchart illustrating a flow of a series of processes of a determination support system.
Fig. 15 is a diagram illustrating a display screen according to a first modification example.
Fig. 16 is a diagram illustrating a display screen according to a second modification example.
Fig. 17 is a diagram illustrating a display screen according to a third modification example.
Fig. 18 is a diagram illustrating an example of an operation of changing a region to be enlarged.
Fig. 19 is a diagram illustrating a display screen according to a fourth modification example.
Fig. 20 is a diagram illustrating an example of difference processing by a difference image generation unit.
Fig. 21 is a diagram illustrating an example of a positional deviation correction process by a positional deviation correction unit.

### DESCRIPTION OF THE PREFERRED EMBODIMENTS

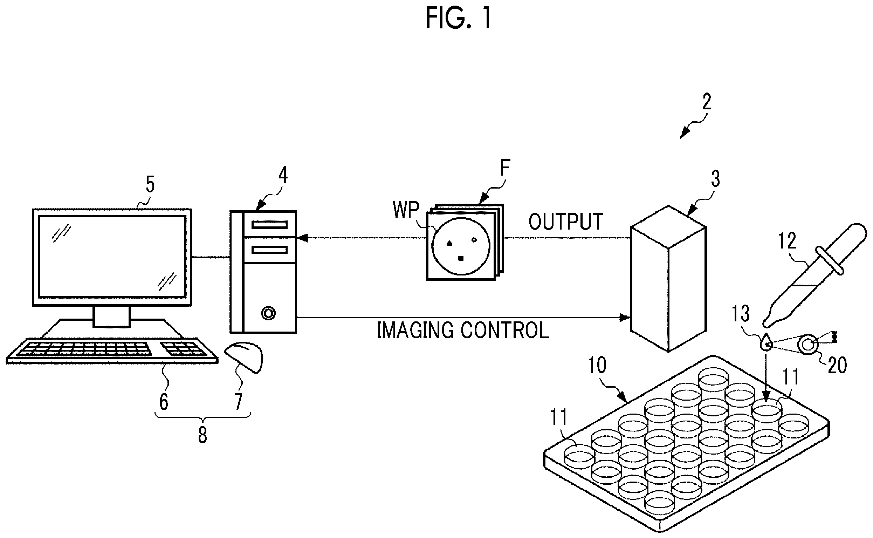

Fig. 1 schematically illustrates a determination support system 2. The determination support system 2 is a system that supports "monoclonality determination" in which an examiner visually determines whether or not a cell population formed in a well as a culture vessel is derived from single cells. The examiner performs the monoclonality determination on the basis of an image of the well at the time when the cells are seeded. In addition, the cell population is a mass of a plurality of cells formed by the division of the seeded cells and is also referred to as a colony.

The determination support system 2 includes an imaging device 3 and an information processing device 4. The information processing device 4 is composed of a computer. For example, a display 5, a keyboard 6, and a mouse 7 are connected to the information processing device 4. The keyboard 6 and the mouse 7 constitute an input operation unit 8 for the user to input information. The input operation unit 8 also includes, for example, a touch panel.

The imaging device 3 is, for example, a phase contrast microscope and optically images a well plate 10, in which cells are seeded and cultured, as an object to be imaged. In Fig. 1, for example, a light source for illuminating the object to be imaged is not illustrated. A plurality of wells 11 are formed in the well plate 10. As the well plate 10, for example, a "96-well plate" in which 96 wells 11 are formed is used. Each well 11 is a culture vessel in which one cell is seeded. In this embodiment, for the sake of simplicity of illustration, a "24-well plate" in which 24 wells 11 are formed is illustrated as the well plate 10. In addition, the well 11 is an example of a vessel according to the technique of the present disclosure.

The cells are seeded by dispensing a droplet 13 into each well 11 from a reservoir containing a culture medium solution including the cells using, for example, a pipette 12. A cell 20 is included in the droplet 13. The cell 20 is, for example, a CHO cell that produces an antibody. For example, a gene corresponding to a desired human protein is inserted into the cell 20.

The imaging device 3 images each well 11 of the well plate 10 as the object to be imaged. For example, the imaging device 3 focuses on the bottom of the well 11 and performs imaging. In a case in which the cell 20 is seeded in the well 11, the cell 20 is imaged by the imaging device 3 in a state in which it is settled at the bottom of a medium solution in the well 11. Each of the images (hereinafter, referred to as vessel images) WP of the wells 11 captured by the imaging device 3 is transmitted to the information processing device 4. The seeded cell 20 is included in the vessel image WP.

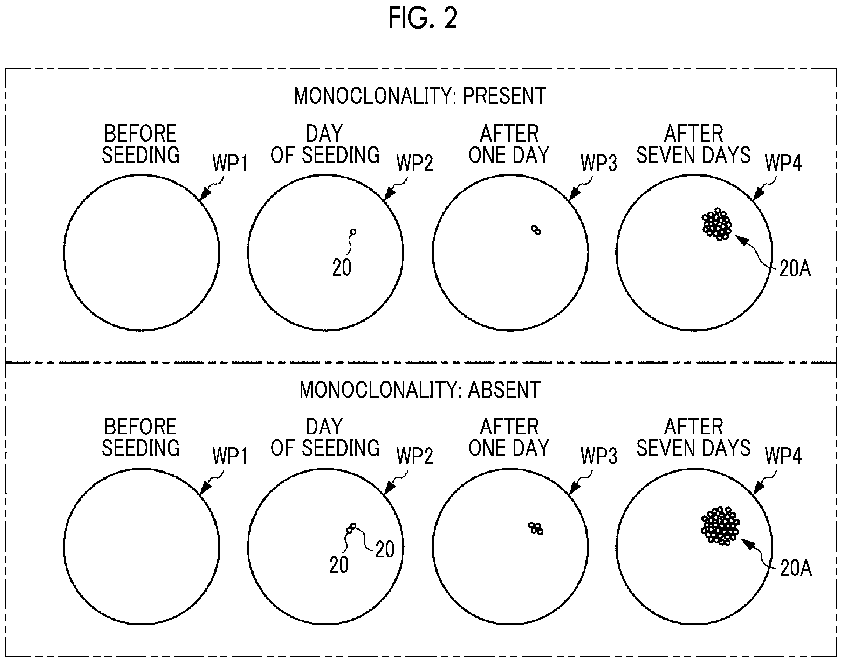

Fig. 2 illustrates the types of vessel images WP captured by the imaging device 3. The imaging device 3 performs imaging before the seeding of the cell 20 in the well 11 and then performs imaging on the day of the seeding of the cell 20 and two or more days after the seeding of the cell 20.

Hereinafter, the image of the well 11 captured before the seeding of the cell 20 is referred to as a first vessel image WP1. The image of the well 11 captured on the day of the seeding of the cell 20 is referred to as a second vessel image WP2. The image of the well 11 captured on the day (that is, one day after) after the seeding of the cell 20 is referred to as a third vessel image WP3. The image of the well 11 captured in a culture process two days (that is, two or more days after) after the seeding of the cell 20 is referred to as a fourth vessel image WP4.

In this embodiment, the image of the well 11 captured 7 days after the seeding of the cell 20 is referred to as the fourth vessel image WP4. In addition, a plurality of fourth vessel images WP4 may be acquired by imaging the well 11 whenever a predetermined period of time elapses from the day of the seeding of the cell 20 in a culture process two or more days after the seeding of the cell 20.

In the following description, in a case in which the first vessel image WP1, the second vessel image WP2, the third vessel image WP3, and the fourth vessel image WP4 do not need to be distinguished from each other, they are simply referred to as vessel images WP.

The upper side of Fig. 2 schematically illustrates the vessel images WP1 to WP4 in a case in which a cell population 20A formed as a result of seeding only one cell 20 in one well 11 has the monoclonality. The lower side of Fig. 2 schematically illustrates the vessel images WP1 to WP4 in a case in which the cell population 20A formed as a result of erroneously seeding two cells 20 in one well 11 does not have the monoclonality.

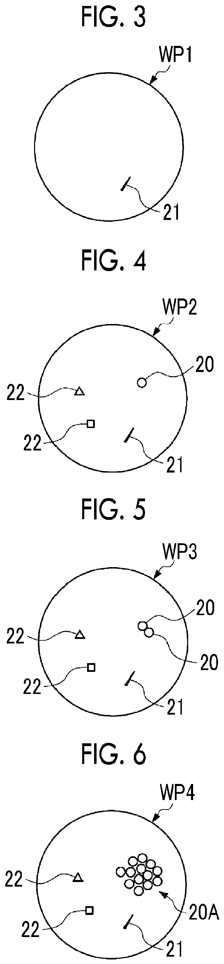

Fig. 3 schematically illustrates an example of the first vessel image WP1. Since the first vessel image WP1 is an image obtained by imaging the well 11 before the seeding of the cell 20, it does not include the cell 20. In addition, since the first vessel image WP1 is an image obtained by imaging the well 11 having a scratch 21, for example, it includes only the scratch 21.

Fig. 4 schematically illustrates an example of the second vessel image WP2. The second vessel image WP2 is an image obtained by imaging the well 11 on the day of the seeding of the cell 20. Therefore, for example, the second vessel image WP2 includes debris 22 included in a culture medium and the scratch 21 on the well 11, in addition to the seeded cell 20. The debris 22 include, for example, dead cells, cell debris, and dust. A large number of debris 22 and scratches 21 on the well 11 may be present in one well 11.

Fig. 5 schematically illustrates an example of the third vessel image WP3. The third vessel image WP3 is an image obtained by imaging the well 11 the day after the seeding of the cell 20. Therefore, for example, the third vessel image WP3 includes two cells 20 divided by cell division. In addition, the third vessel image WP3 includes the debris 22 and the scratch 21 on the well 11, like the second vessel image WP2.

Fig. 6 schematically illustrates an example of the fourth vessel image WP4. The fourth vessel image WP4 is an image obtained by imaging the well 11 two or more days after the seeding of the cell 20. Therefore, for example, the fourth vessel image WP4 includes the cell population 20A formed by the repetitive division of the cell 20. Further, the fourth vessel image WP4 includes the debris 22 and the scratch 21 on the well 11, like the second vessel image WP2.

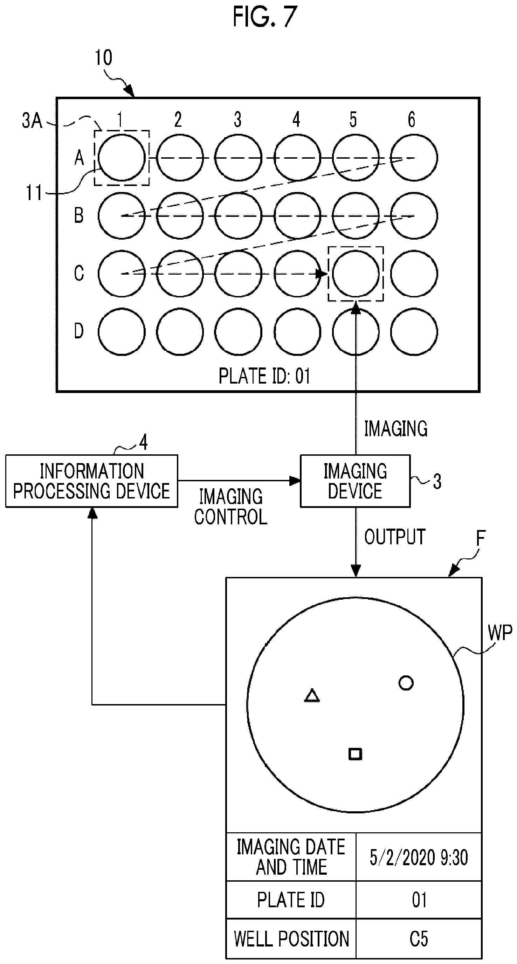

Fig. 7 illustrates an example of an imaging operation of the imaging device 3. The imaging operation of the imaging device 3 is controlled by the information processing device 4. The imaging device 3 sequentially images a plurality of wells 11 formed in the well plate 10 one by one. Specifically, the imaging device 3 images each well 11 while sequentially changing an imaging region 3A to generate the vessel images WP.

In addition, the imaging device 3 creates an image file F in which accessory information has been added to the vessel image WP and transmits the image file F to the information processing device 4. The accessory information includes an imaging date and time, a plate identification (ID), and a well position. The imaging date and time is information related to the date and time when the well 11 was imaged. The plate ID is identification information that identifies each well plate 10. The well position is the positional information of the well 11 in the well plate 10. For example, for the well position, a position related to a vertical direction is represented by an alphabet and a position related to a horizontal direction is represented by a numerical value. The well position is represented by a combination of the alphabet and the numerical value.

The plate ID is acquired, for example, by reading a bar code attached to the well plate 10 with a bar code reader (not illustrated).

The imaging device 3 images the well plate 10 at the date and time designated by the information processing device 4. The imaging device 3 generates the image file F for each well 11 in the well plate 10 and transmits the image file F to the information processing device 4.

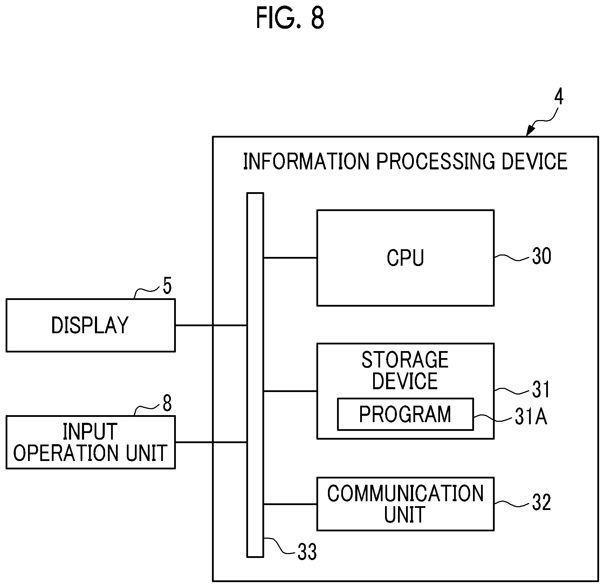

Fig. 8 illustrates a hardware configuration of the information processing device 4. As illustrated in Fig. 8, the information processing device 4 comprises a central processing unit (CPU) 30, a storage device 31, and a communication unit 32, which are connected to each other through a bus line 33. In addition, the display 5 and the input operation unit 8 are connected to the bus line 33.

The CPU 30 is an arithmetic device that reads a program 31A and various types of data (not illustrated) stored in the storage device 31 and performs a process to implement various functions. The CPU 30 is an example of a "processor" according to the technique of the present disclosure.

The storage device 31 includes, for example, a random access memory (RAM), a read only memory (ROM), a storage device, or the like. The RAM is, for example, a volatile memory used as a work area or the like. The ROM is, for example, a non-volatile memory, such as a flash memory, that stores a program 31A and various types of data. The storage device is, for example, a hard disk drive (HDD) or a solid state drive (SSD). The storage device stores, for example, an operating system (OS), application programs, image data, and various types of data.

The communication unit 32 is a network interface that controls the transmission of various types of information through a network such as a local area network (LAN) or a wide area network (WAN). The display 5 displays various screens. The information processing device 4 receives an input of an operation instruction from the input operation unit 8 through various screens.

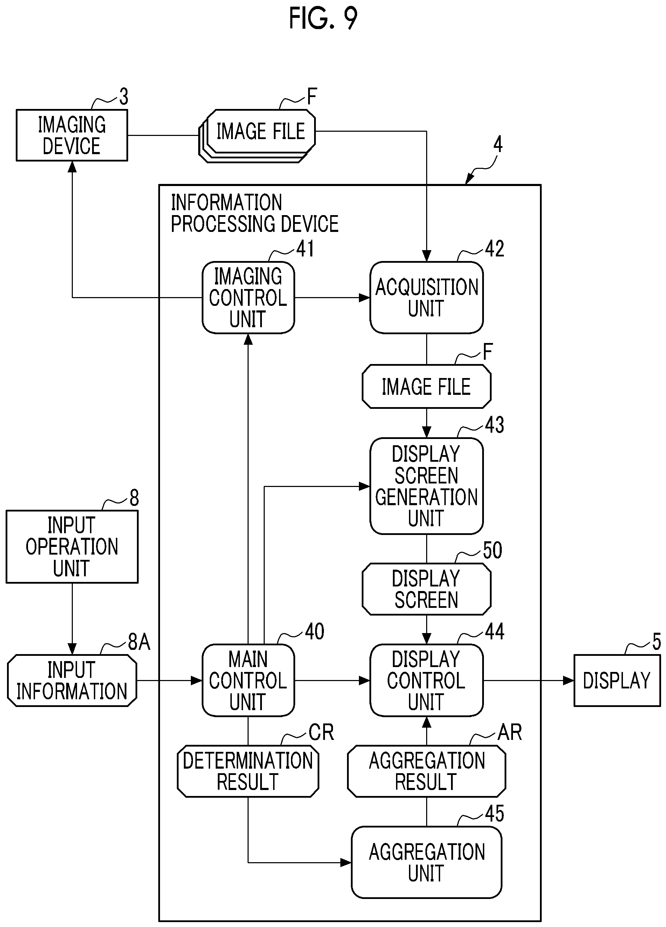

Fig. 9 illustrates a functional configuration of the information processing device 4. The CPU 30 performs a process on the basis of the program 31A to implement the functions of the information processing device 4. As illustrated in Fig. 9, a main control unit 40, an imaging control unit 41, an acquisition unit 42, a display screen generation unit 43, a display control unit 44, and an aggregation unit 45 are configured in the information processing device 4.

The main control unit 40 controls each unit of the information processing device 4 on the basis of input information 8A input from the input operation unit 8. The imaging control unit 41 controls an imaging operation of the imaging device 3 under the control of the main control unit 40. The acquisition unit 42 acquires the image file F output from the imaging device 3 and inputs the acquired image file F to the display screen generation unit 43.

The display screen generation unit 43 generates a display screen 50 for displaying the vessel image WP on the display 5 on the basis of the image file F. The display control unit 44 displays the display screen 50 generated by the display screen generation unit 43 on the display 5 under the control of the main control unit 40. The display screen 50 is a screen in which two or more vessel images WP of the same well 11 captured at different dates and times are displayed such that different imaging dates and times can be distinguished. Here, the term "different dates and times" means that at least time points are different. That is, the "two or more vessel images WP captured at different dates and times" include two or more vessel images WP captured at different time points on the same day.

In addition, the display control unit 44 displays the display screen 50 as a graphical user interface (GUI) such that the examiner can operate the display screen 50 with the input operation unit 8.

The aggregation unit 45 receives a determination result CR of the monoclonality input from the input operation unit 8 through the main control unit 40 and aggregates the received determination result CR. In addition, the aggregation unit 45 aggregates the determination result CR for each well plate 10 to generate an aggregation result AR. The display control unit 44 displays the aggregation result AR generated by the aggregation unit 45 on the display 5.

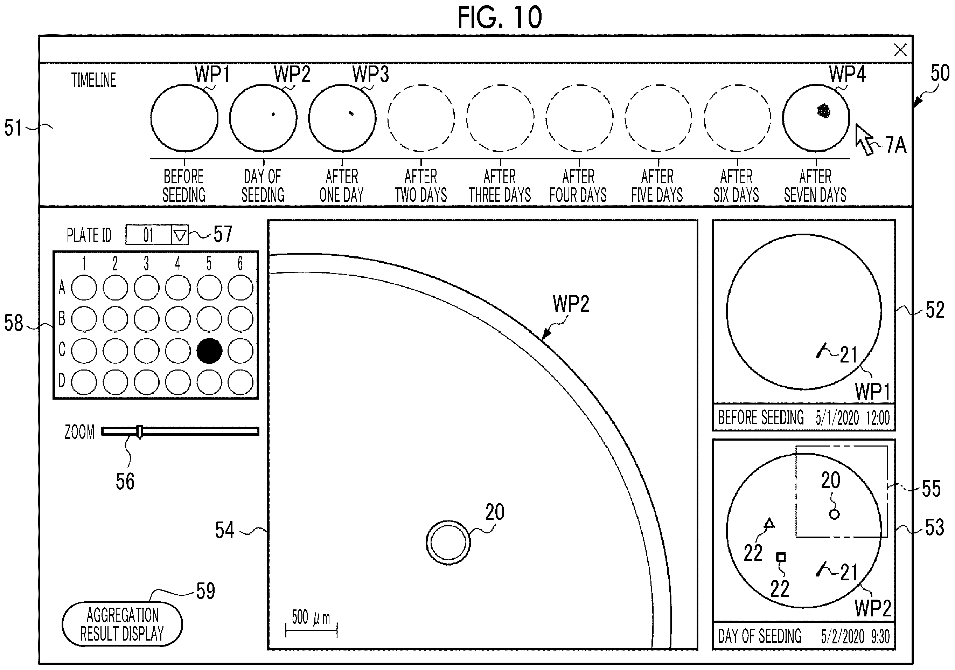

Fig. 10 illustrates an example of the display screen 50 displayed on the display 5. Fig. 10 illustrates the display screen 50 generated on the basis of the first vessel image WP1, the second vessel image WP2, the third vessel image WP3, and the fourth vessel image WP4. The examiner can perform the monoclonality determination using the display screen 50.

The display screen 50 includes a first display region 51, a second display region 52, a third display region 53, and a fourth display region 54.

The first display region 51 is a region in which so-called timeline display that displays two or more vessel images WP at positions corresponding to the number of days elapsed since the seeding of the cell 20 is performed. In this embodiment, the first vessel image WP1, the second vessel image WP2, the third vessel image WP3, and the fourth vessel image WP4 are displayed on a timeline in the first display region 51. In the first display region 51, the number of days elapsed since the seeding of the cell 20 is displayed in association with each vessel image WP.

The second display region 52 and the third display region 53 are regions in which one image selected from the first vessel image WP1, the second vessel image WP2, the third vessel image WP3, and the fourth vessel image WP4 is displayed. The second display region 52 and the third display region 53 are disposed adjacent to each other such that two vessel images WP having different imaging times can be compared. The imaging time of the vessel image WP is displayed in each of the second display region 52 and the third display region 53. The examiner can operate the input operation unit 8 to select the vessel images WP to be displayed in the second display region 52 and the third display region 53. In the example illustrated in Fig. 10, the first vessel image WP1 before seeding is displayed in the second display region 52, and the second vessel image WP2 on the day of the seeding of the cell is displayed in the third display region 53.

The fourth display region 54 is a region in which the vessel image WP is partially enlarged and displayed. Specifically, an image included in a region 55 to be enlarged, which is set in the second display region 52 or the third display region 53, is enlarged and displayed in the fourth display region 54. The examiner can operate the input operation unit 8 to set the region 55 to be enlarged. In the example illustrated in Fig. 10, the region 55 to be enlarged is set in the third display region 53 in which the second vessel image WP2 is displayed.

In addition, a zoom slider 56 as a zoom operation unit is displayed on the display screen 50. The examiner can perform an operation of sliding the zoom slider 56 using the input operation unit 8 to change the zoom magnification of the image displayed in the fourth display region 54.

Further, a selection operation portion 57 for selecting the plate ID and a selection operation portion 58 for selecting the well position are displayed on the display screen 50. The examiner can operate the selection operation portion 57 using the input operation unit 8 to select a desired plate ID. In addition, the examiner can operate the selection operation portion 58 using the input operation unit 8 to select a desired well position. The vessel image WP of the well 11 corresponding to the well position selected by the selection operation portion 58 in the well plate 10 having the plate ID selected by the selection operation portion 57 is displayed on the display screen 50.

In addition, an aggregation result display button 59 for displaying the aggregation result AR is displayed on the display screen 50. The examiner can operate the aggregation result display button 59 using the input operation unit 8 to display the aggregation result AR on the display 5.

Further, a cursor 7A that is operated by the mouse 7 (see Fig. 1) included in the input operation unit 8 is displayed on the display screen 50. The examiner can operate the mouse 7 using the cursor 7A to perform various selection operations.

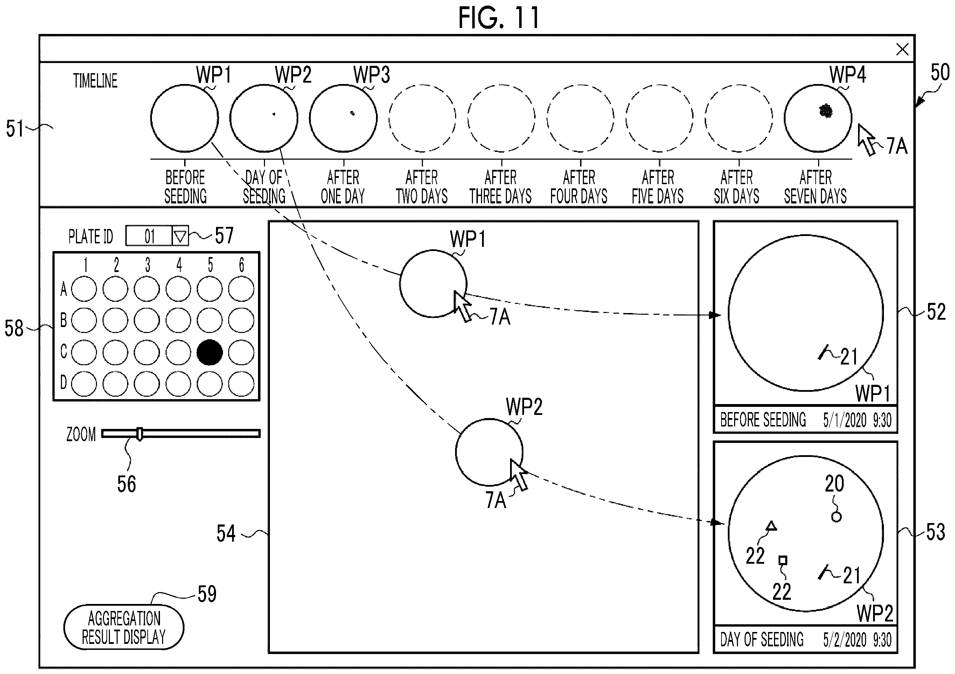

Fig. 11 illustrates an example of the operation of selecting the vessel images WP to be displayed in the second display region 52 and the third display region 53. As illustrated in Fig. 11, the examiner operates the mouse 7 to move the cursor 7A and selects a desired vessel image WP from two or more vessel images WP displayed in the first display region 51. Then, the examiner performs a so-called drag-and-drop operation to move the selected vessel image WP to the second display region 52 or the third display region 53. Fig. 11 illustrates an example in which the first vessel image WP1 is selected from the first display region 51 and is displayed in the second display region 52 and the second vessel image WP2 is selected from the first display region 51 and is displayed in the third display region 53.

The examiner can select any two vessel images WP having different imaging dates and times from the two or more vessel images WP displayed in the first display region 51 and can display the selected vessel images in the second display region 52 and the third display region 53. The examiner can compare the two vessel images WP displayed in the second display region 52 and the third display region 53 having different imaging dates and times to efficiently perform the monoclonality determination.

Many of the debris 22 present in the well 11 are similar to the cell 20 in appearance. Therefore, the examiner needs to visually determine whether or not the debris 22 is a cell, in addition to the cell 20. For this reason, in a case in which the monoclonality determination is performed on the basis of one vessel image WP, all of the debris 22 included in the vessel image WP need to be visually checked, which imposes a heavy burden on the examiner.

In contrast, in the technique of the present disclosure, the examiner can perform the monoclonality determination while comparing any two vessel images WP having different imaging dates and times. For example, the examiner can compare the first vessel image WP1 (see Fig. 3) before seeding with the second vessel image WP2 (see Fig. 4) on the day of seeding to easily distinguish the scratch 21 on the well 11 from the cell 20 and the debris 22.

In addition, for example, the examiner can compare the second vessel image WP2 on the day of seeding with the third vessel image WP3 (see Fig. 5) captured the day after seeding to easily distinguish the scratch 21 and the debris 22 from the cell 20. Further, the examiner can compare the second vessel image WP2 with the third vessel image WP3 to find the cell 20 that was not imaged on the day of seeding because it had not been settled at the bottom of the well 11 and was imaged because it had been settled by the day after seeding. Furthermore, the examiner can compare the second vessel image WP2 with the third vessel image WP3 to find, for example, the cell 20 that was not imaged on the day of seeding because it had overlapped the debris 22.

In addition, for example, the examiner can compare the second vessel image WP2 on the day of seeding with the fourth vessel image WP4 (see Fig. 6) in the culture process to easily distinguish the debris 22, such as a dead cell, that is similar to the cell 20 in appearance and the cell population 20A formed as a result of the cell division. Further, the examiner can compare the third vessel image WP3 captured the day after seeding with the fourth vessel image WP4 in the culture process to perform the same distinguishment as described above.

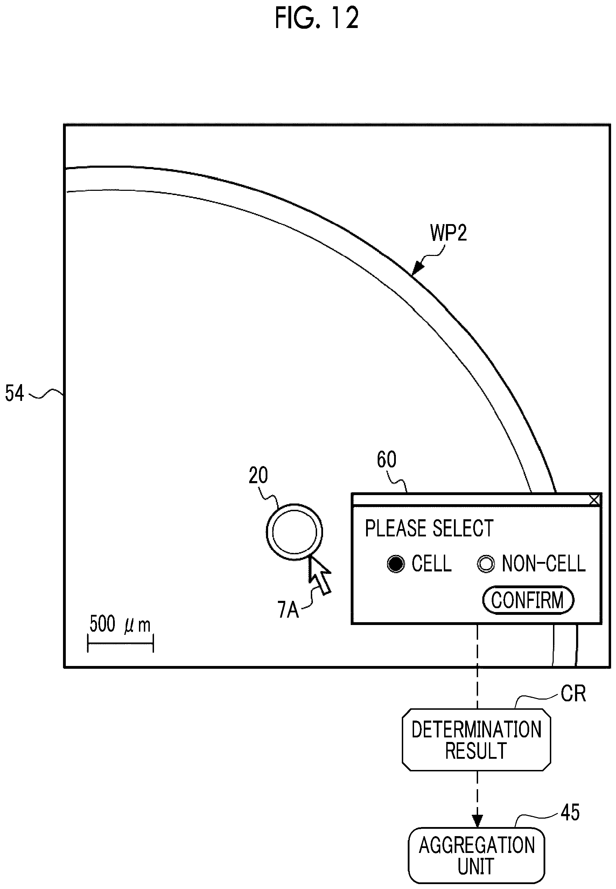

Fig. 12 illustrates an example of an input interface for inputting the determination result CR of the examiner indicating whether or not an object is a cell. As illustrated in Fig. 12, for example, the display control unit 44 displays a selection box 60 as a GUI in the fourth display region 54 in response to an operation of the examiner through the input operation unit 8.

The examiner selects whether an object is a cell or a non-cell on the basis of the selection box 60, using the input operation unit 8. For example, the examiner selects whether each of the cell 20 and the debris 22 as the objects included in the second vessel image WP2 captured on the day of seeding is a cell or a non-cell. In a case in which the selection is confirmed using the input operation unit 8, the determination result CR of whether or not the object is a cell is input to the aggregation unit 45. In a case in which an aggregation result shows that the number of true cells confirmed in the second vessel image WP2 is 1, it is determined that the cell population 20A formed in the well 11 is derived from a single cell and has monoclonality.

The examiner can compare two or more vessel images WP as described above to distinguish the cell 20, the debris 22, and the scratch 21 on the well 11 and then determine whether or not the object is a true cell. Therefore, the burden on the examiner in the monoclonality determination is reduced.

In addition, in the monoclonality determination using a microscope according to the related art, the examiner needs to perform an operation of checking the shapes of the objects present in each well of a large number of well plates one by one while moving the focus of the microscope to each object. In contrast, in the technique of the present disclosure, all of the wells in the well plate are imaged at once to acquire the vessel images WP. It is preferable that the captured vessel image WP is a two-dimensional image. The acquired two-dimensional images which are the vessel images WP, such as the image captured before the seeding of the cell, the image captured on the day of seeding, the image captured the day after seeding, and the image captured two or more days after seeding, are compared and observed, which makes it possible to reduce the burden on the examiner, without checking the shape of the object while moving the focus as in a case in which the object is observed with the microscope.

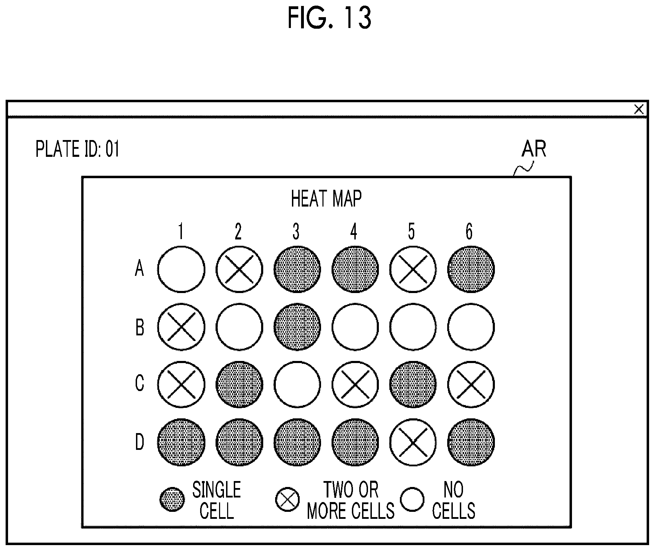

Fig. 13 illustrates an example of the display of the aggregation result AR by the display control unit 44. As illustrated in Fig. 13, whether each well 11 of the well plate 10 includes a "single cell", "two or more cells", or "no cells" is displayed on the basis of the aggregation result AR. The display aspect illustrated in Fig. 13 is a so-called heat map, and the user can visually understand the number of wells 11 in which a single cell is seeded and the position thereof. In addition, the aggregation result AR is not limited to the heat map and may be a table in which the unity of the cells or the number of cells is listed for each well 11.

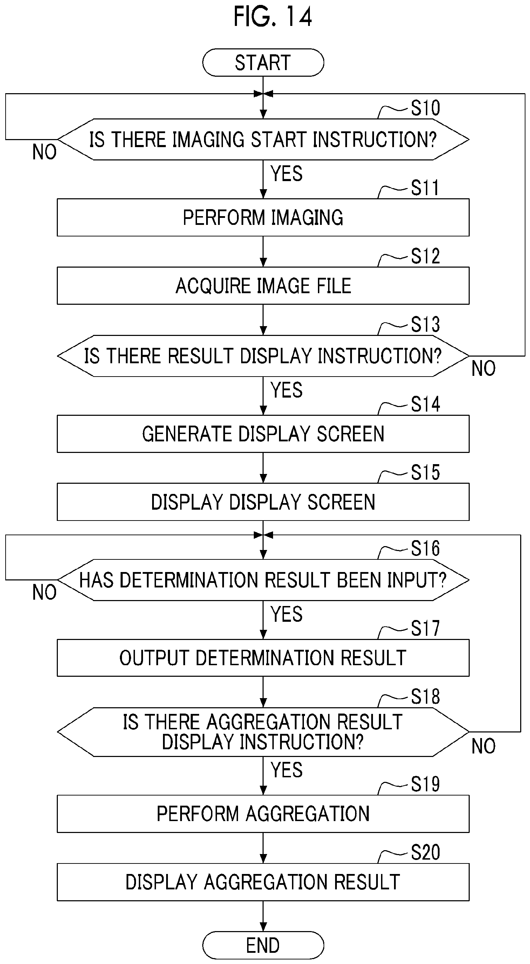

Next, a flow of a series of processes of the determination support system 2 will be described with reference to a flowchart illustrated in Fig. 14. The main control unit 40 determines whether or not an instruction to start imaging has been input from the input operation unit 8 (Step S10). In a case in which the main control unit 40 determines that the instruction to start imaging has been input (Step S10: YES), it directs the imaging device 3 to perform an imaging operation through the imaging control unit 41 as illustrated in Fig. 7 (Step S11). The acquisition unit 42 acquires the image file F output from the imaging device 3 (Step S12).

Then, the main control unit 40 determines whether or not an instruction to display the imaging result has been input from the input operation unit 8 (Step S13). In a case in which the display instruction has not been input (Step S13: NO), the main control unit 40 returns the process to Step S10. The examiner gives the imaging start instruction using the input operation unit 8 at an appropriate date and time, such as before seeding, on the day of seeding, the day after seeding, or two or more days after seeding, such that the imaging device 3 outputs the image files F captured at different dates and times.

In a case in which it is determined that the instruction to display the imaging result has been input (Step S13: YES), the main control unit 40 directs the display screen generation unit 43 to generate the display screen 50 (Step S14). Then, the main control unit 40 displays the display screen 50 on the display 5 through the display control unit 44 as illustrated in Fig. 10 (Step S15). The examiner can appropriately select the vessel images WP to be displayed in the second display region 52 and the third display region 53 of the display screen 50 (see Fig. 11). The examiner compares the vessel images WP displayed in the second display region 52 and the third display region 53 to distinguish the scratch 21 on the well 11, the cell 20, and the debris 22 and then determines whether or not each object in the second vessel image WP2 is a true cell (see Fig. 12).

The main control unit 40 determines whether or not the determination result CR has been input by the examiner using the input operation unit 8 (Step S16). In a case in which it is determined that the determination result CR has been input (Step S16: YES), the main control unit 40 outputs the determination result CR to the aggregation unit 45 (Step S17).

Then, the main control unit 40 determines whether or not an instruction to display the aggregation result AR has been input by the operation of the aggregation result display button 59 (see Fig. 10) by the examiner through the input operation unit 8 (Step S18). In a case in which the display instruction has not been input (Step S18: NO), the main control unit 40 returns the process to Step S16. For example, the examiner inputs the determination result CR on the basis of the second vessel image WP2 corresponding to each well 11 included in one well plate 10 and then operates the aggregation result display button 59.

In a case in which it is determined that the instruction to display the aggregation result AR has been input (Step S18: YES), the main control unit 40 directs the aggregation unit 45 to aggregate the determination result CR to generate the aggregation result AR (Step S19). Then, the main control unit 40 displays the aggregation result AR on the display 5 through the display control unit 44 as illustrated in Fig. 13 (Step S20). The examiner can determine whether or not to continue the culture for each well 11 on the basis of the aggregation result AR.

Hereinafter, various modification examples of the above-described embodiment will be described.

### [First Modification Example]

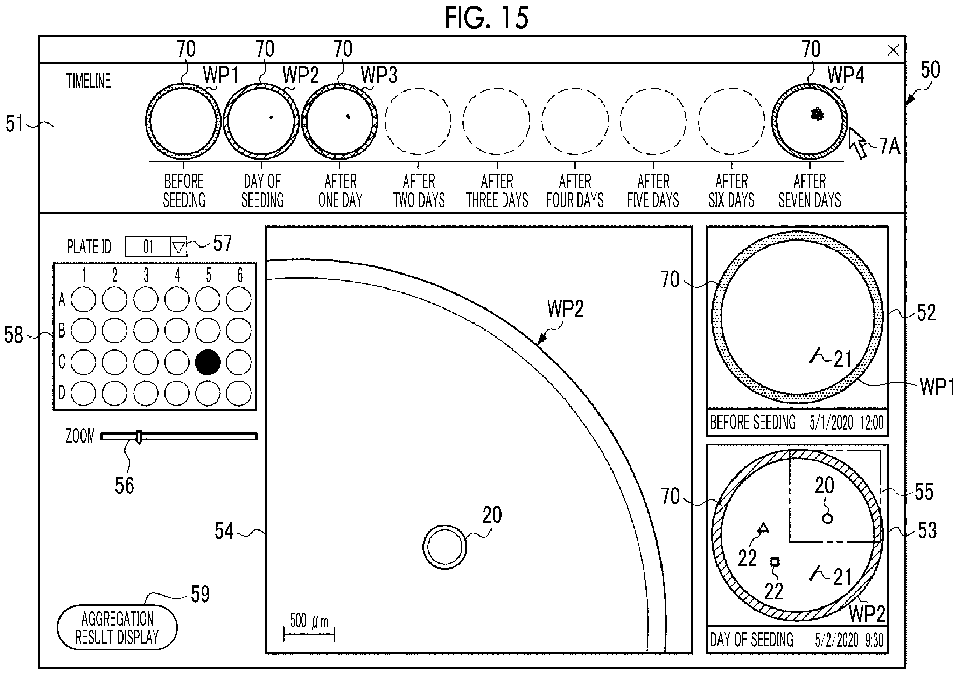

A first modification example is a modification example related to the display aspect of the display screen 50. Fig. 15 illustrates a display screen 50 according to the first modification example. In this modification example, as illustrated in Fig. 15, a frame 70 is provided for each of the vessel images WP. The frame 70 is displayed such that the color thereof changes depending on the imaging date and time. In addition, in Fig. 15, the difference in the color of the frame 70 is represented by a difference in hatching.

For the frames 70 of the vessel images WP displayed in the first display region 51, the second display region 52, and the third display region 53, the frames having the same imaging date and time are displayed in the same color. This enables the examiner to intuitively recognize a difference in the imaging date and time.

Further, in this modification example, the shape of the frame 70 is circular. However, the shape is not limited to the circular shape and may be other shapes including a rectangular shape.

### [Second Modification Example]

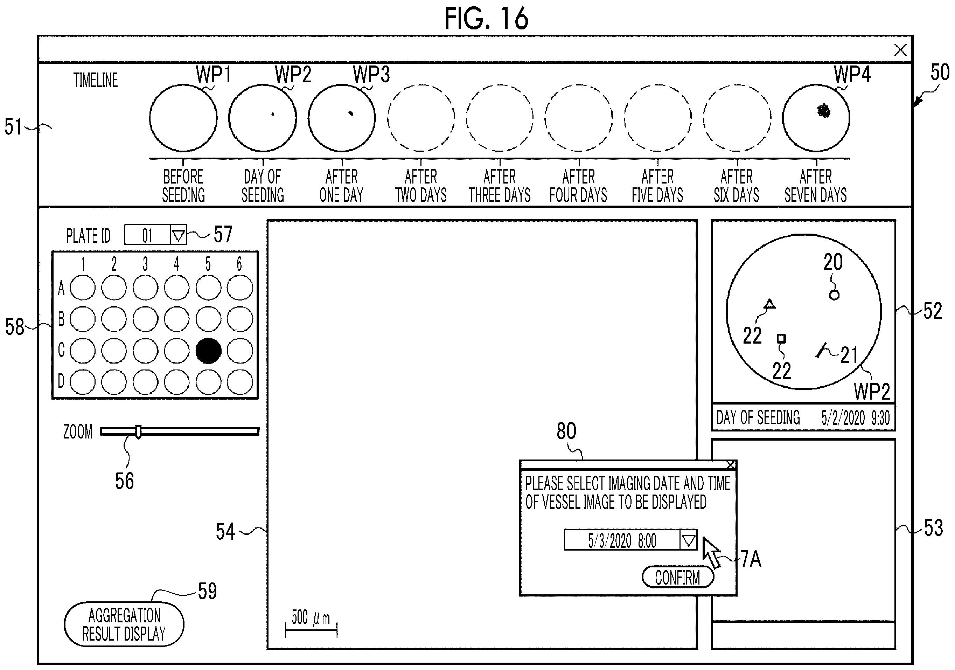

A second modification example is a modification related to the selection of the vessel image WP to be displayed on the display screen 50. Fig. 16 illustrates a display screen 50 according to the second modification example. In the above-described embodiment, the vessel image WP to be displayed in the second display region 52 or the third display region 53 can be selected by the drag-and-drop operation. In contrast, in this modification example, the vessel image WP to be displayed in the second display region 52 or the third display region 53 can be selected by a selection box 80 as a GUI.

Fig. 16 illustrates a situation in which, in a case in which the second vessel image WP2 captured on the day of seeding is displayed in the second display region 52, the vessel image WP captured at a different imaging date and time from that of the second vessel image WP2 is selected and displayed in the third display region 53. The examiner can operate the input operation unit 8 on the basis of the selection box 80 to select the imaging date and time such that the vessel image WP corresponding to the selected imaging date and time is displayed in the third display region 53. The vessel image WP displayed in the third display region 53 is an image which corresponds to the same well plate 10 and the same well 11 as the second vessel image WP2 being displayed in the second display region 52.

In addition, in the example illustrated in Fig. 16, the imaging date and time is displayed in the selection box 80. However, the present disclosure is not limited thereto. The number of days elapsed since a seeding day may be displayed to be selectable.

### [Third Modification Example]

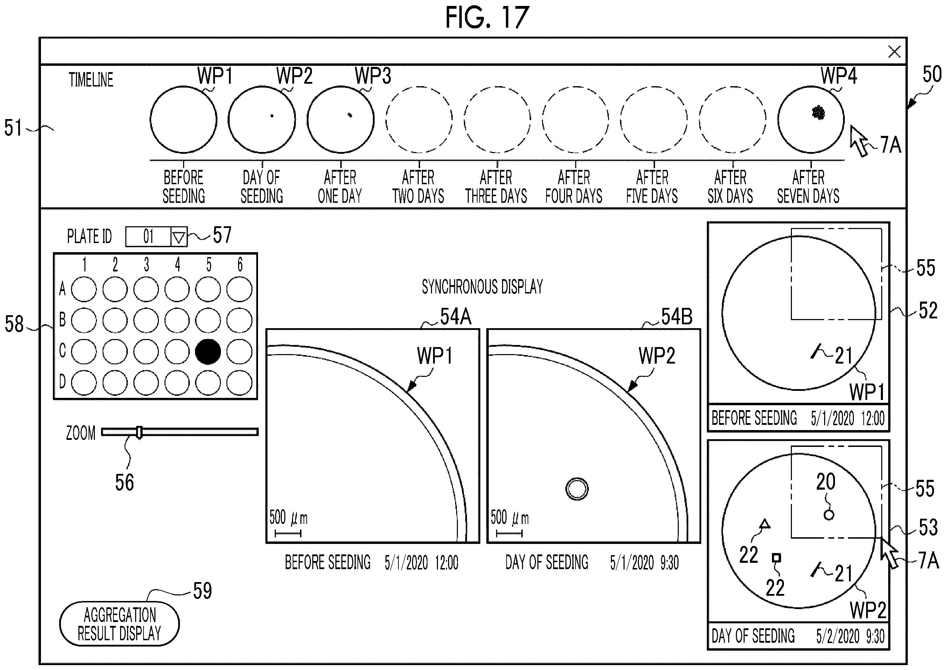

A third modification example is a modification example related to the fourth display region 54 (see Fig. 10) of the display screen 50. Fig. 17 illustrates a display screen 50 according to the third modification example. In this modification example, the region 55 to be enlarged which has been set in one of the second display region 52 and the third display region 53 is also reflected in the other. Further, in this modification example, instead of the fourth display region 54, a first enlargement display region 54A and a second enlargement display region 54B are displayed to be adjacent to each other.

In the first enlargement display region 54A, an image included in the region 55 to be enlarged, which has been set in the second display region 52, is enlarged and displayed. In the second enlargement display region 54B, an image included in the region 55 to be enlarged, which has been set in the third display region 53, is enlarged and displayed.

The examiner can use the input operation unit 8 to change the position or size of the region 55 to be enlarged which has been set in the second display region 52 or the third display region 53. In a case in which the region 55 to be enlarged in one of the second display region 52 and the third display region 53 is changed, the region 55 to be enlarged in the other is changed in operative association with the change. The images displayed in the first enlargement display region 54A and the second enlargement display region 54B are changed in operative association with the change in the region 55 to be enlarged. In addition, in a case in which the examiner operates the zoom slider 56, the zoom magnification of the images displayed in the first enlargement display region 54A and the second enlargement display region 54B is changed in operative association with this zoom operation.

Therefore, in this modification example, two vessel images WP having different imaging dates and times selected by the examiner are synchronously displayed. Here, the synchronous display means that an operation on one image is also applied to the other image.

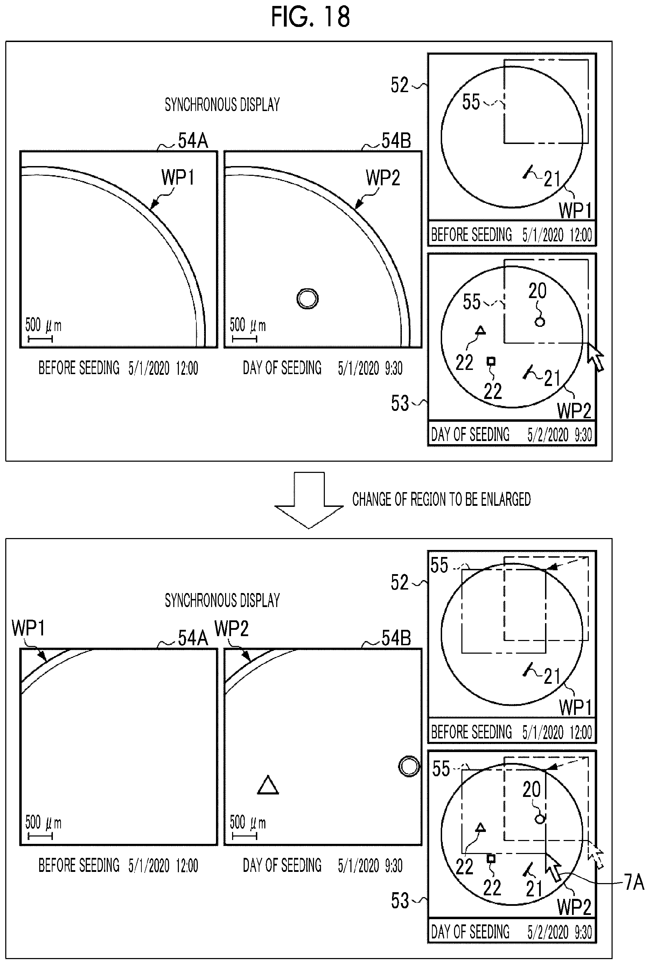

Fig. 18 illustrates an example of the operation of changing the region 55 to be enlarged. In a case in which the examiner sets the region 55 to be enlarged in the third display region 53, the region 55 to be enlarged is set at a corresponding position of the second display region 52. In the first enlargement display region 54A, a portion included in the region 55 to be enlarged in the first vessel image WP1 displayed in the second display region 52 is enlarged and displayed. In the second enlargement display region 54B, a portion included in the region 55 to be enlarged in the second vessel image WP2 displayed in the third display region 53 is enlarged and displayed.

In a case in which the examiner moves the region 55 to be enlarged which has been set in the third display region 53, the region 55 to be enlarged, which has been set in the second display region 52, is moved in operative association with the movement. Then, the images displayed in the first enlargement display region 54A and the second enlargement display region 54B are changed in operative association with the movement of the region 55 to be enlarged.

In this modification example, the two vessel image WPs are synchronously displayed. However, the number of vessel images WP to be synchronously displayed is not limited to two and may be three or more.

### [Fourth Modification Example]

In the above-described embodiment, the enlarged image of the vessel image WP displayed in the second display region 52 or the third display region 53 is displayed. Instead of this, in a fourth modification example, a difference image between the vessel image WP displayed in the second display region 52 and the vessel image WP displayed in the third display region 53 is displayed.

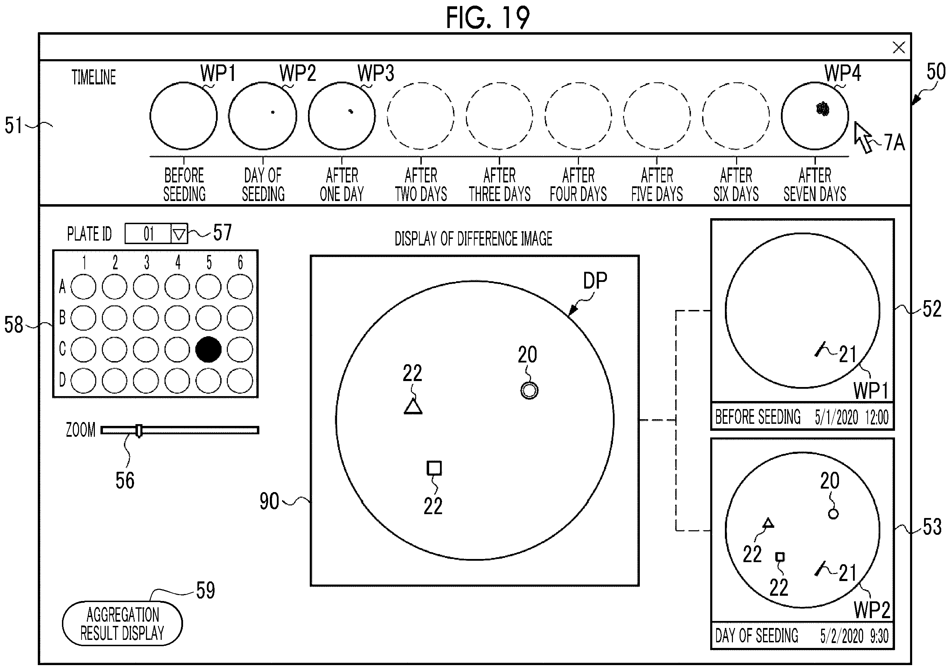

Fig. 19 illustrates a display screen 50 according to the fourth modification example. In this modification example, the display screen 50 is provided with a difference image display region 90 instead of the fourth display region 54 (see Fig. 10). A difference image DP is displayed in the difference image display region 90. In the example illustrated in Fig. 19, the difference image DP is an image obtained by subtracting the first vessel image WP1 displayed in the second display region 52 from the second vessel image WP2 displayed in the third display region 53.

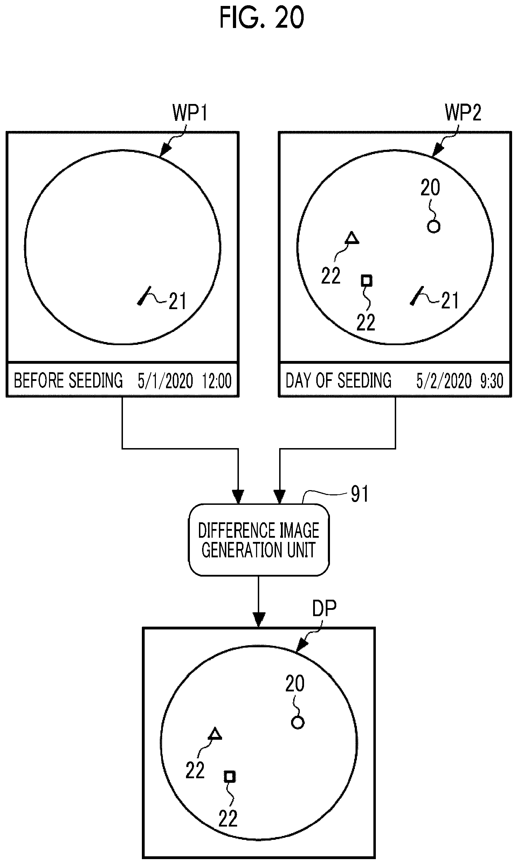

In this modification example, a difference image generation unit 91 illustrated in Fig. 20 is provided in the display screen generation unit 43. The difference image generation unit 91 subtracts, from one of two input vessel images WP, the other vessel image to generate the difference image DP.

As illustrated in Figs. 19 and 20, the scratch 21 on the well 11 can be removed by subtracting the first vessel image WP1 from the second vessel image WP2 to generate the difference image DP. In addition, it is preferable that the difference image generation unit 91 calculates the difference between the first vessel image WP1 and the second vessel image WP2, the third vessel image WP3, or the fourth vessel image WP4 in order to remove the scratch 21 on the well 11.

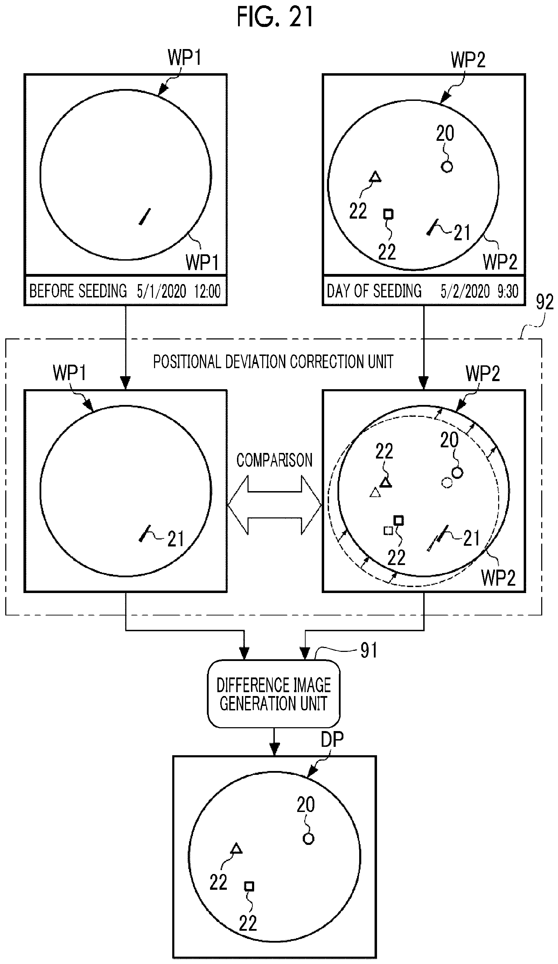

Further, as illustrated in Fig. 21, a positional deviation correction unit 92 that corrects the positional deviation between two vessel images WP before the difference image generation unit 91 performs a difference image generation process may be provided. The positional deviation correction unit 92 corrects the positional deviation on the basis of the shape of the well 11 or the scratch 21 on the well 11 in the vessel image WP. For example, the positional deviation correction unit 92 compares the first vessel image WP1 with the second vessel image WP2 to correct the position of the second vessel image WP2.

The positional deviation correction unit 92 supplies the two vessel images WP subjected to the positional deviation correction to the difference image generation unit 91. In addition, the positional deviation correction unit 92 may perform the positional deviation correction using a method such as rigid transformation.

The hardware configuration of the computer constituting the information processing device 4 can be modified in various ways. For example, the information processing device 4 may be configured by a plurality of computers separated as hardware in order to improve processing capacity and reliability.

In the above-described embodiment, for example, the following various processors can be used as a hardware structure of processing units performing various processes, such as the main control unit 40, the imaging control unit 41, the acquisition unit 42, the display screen generation unit 43, the display control unit 44, and the aggregation unit 45. The various processors include, for example, the CPU 30 which is a general-purpose processor executing software (program 31A) to function as various processing units as described above, a programmable logic device (PLD), such as a field programmable gate array (FPGA), which is a processor whose circuit configuration can be changed after manufacture, and a dedicated electric circuit, such as an application specific integrated circuit (ASIC), which is a processor having a dedicated circuit configuration designed to perform a specific process.

One processing unit may be configured by one of the various processors or a combination of two or more processors of the same type or different types (for example, a combination of a plurality of FPGAs and/or a combination of a CPU and an FPGA). In addition, a plurality of processing units may be configured by one processor.

A first example of the configuration in which a plurality of processing units are configured by one processor is an aspect in which one processor is configured by a combination of one or more CPUs and software and functions as a plurality of processing units. A representative example of this aspect is a client computer or a server computer. A second example of the configuration is an aspect in which a processor that implements the functions of the entire system including a plurality of processing units using one integrated circuit (IC) chip is used. A representative example of this aspect is a system on chip (SoC). As described above, various processing units are configured by one or more of the various processors as a hardware structure.

In addition, specifically, an electric circuit (circuitry) obtained by combining circuit elements, such as semiconductor elements, can be used as the hardware structure of the various processors.

All of the publications, the patent applications, and the technical standards described in the specification are incorporated by reference herein to the same extent as each individual document, each patent application, and each technical standard are specifically and individually stated to be incorporated by reference.

## Claims

1. An information processing device that performs display control to display a vessel image obtained by imaging a vessel in which a cell is seeded on a display, the information processing device comprising:
at least one processor,
wherein the processor acquires two or more vessel images obtained by imaging the same vessel at different dates and times and displays the acquired two or more vessel images on the display such that different imaging dates and times are distinguishable.

2. The information processing device according to claim 1,
wherein the processor acquires, as the vessel images, two or more of a first vessel image captured before the seeding of the cell, a second vessel image captured on a day of the seeding of the cell, a third vessel image captured a day after the seeding of the cell, and a fourth vessel image captured in a culture process two or more days after the seeding of the cell.

3. The information processing device according to claim 1 or 2,
wherein the processor displays each of the two or more vessel images while changing a color of a frame such that different imaging dates and times are distinguishable.

4. The information processing device according to any one of claims 1 to 3,
wherein the processor displays the number of days elapsed since the seeding of the cell in association with each of the two or more vessel images such that different imaging dates and times are distinguishable.

5. The information processing device according to any one of claims 1 to 4,
wherein the processor displays two or more vessel images at positions corresponding to the number of days elapsed since the seeding of the cell such that different imaging dates and times are distinguishable.

6. The information processing device according to any one of claims 1 to 5,
wherein the processor synchronously displays two or more vessel images.

7. The information processing device according to claim 1,
wherein the processor creates a difference image from the two vessel images and displays the created difference image on the display.

8. The information processing device according to claim 7,
wherein the processor creates the difference image from two images selected from a first vessel image captured before the seeding of the cell, a second vessel image captured on a day of the seeding of the cell, a third vessel image captured a day after the seeding of the cell, and a fourth vessel image captured in a culture process two or more days after the seeding of the cell.

9. The information processing device according to claim 8,
wherein the processor calculates a difference between the first vessel image and the second vessel image, the third vessel image, or the fourth vessel image to create the difference image.

10. The information processing device according to claim 9,
wherein the processor performs positional deviation correction on the two vessel images and creates the difference image.

11. The information processing device according to claim 10,
wherein the processor performs the positional deviation correction on the basis of a shape of the vessel or a scratch on the vessel in the vessel image.

12. The information processing device according to any one of claims 1 to 11,
wherein the processor receives input information input from an input operation unit and selects two or more vessel images to be displayed on the display on the basis of the input information.

13. The information processing device according to claim 12,
wherein the processor acquires the vessel image captured at a different date and time for the same vessel as one of the vessel images being displayed on the display on the basis of the input information and displays the acquired vessel image on the display together with the vessel image being displayed on the display.

14. An information processing method that performs a process of displaying a vessel image obtained by imaging a vessel in which a cell is seeded on a display, the information processing method comprising:
acquiring two or more vessel images obtained by imaging the same vessel at different dates and times; and
displaying the acquired two or more vessel images on the display such that different imaging dates and times are distinguishable.

15. A program that causes a computer to execute a process of displaying a vessel image obtained by imaging a vessel in which a cell is seeded on a display, the program causing the computer to execute a process comprising:
acquiring two or more vessel images obtained by imaging the same vessel at different dates and times; and
displaying the acquired two or more vessel images on the display such that different imaging dates and times are distinguishable.
